# EUROPÄISCHE PATENTSCHRIFT

(11) **EP 3 649 420 B1**
(45) Veröffentlichungstag und Bekanntmachung des Hinweises auf die Patenterteilung: **07.06.2023**
(21) Anmeldenummer: 18739721.1
(22) Anmeldetag: 28.06.2018
(51) Int. Cl.: F28F 13/18, F28D 7/16, F24S 80/20, F24B 5/02, F24S 10/30, F24S 20/20, F24S 60/00, F24S 90/00

(54) **VERFAHREN ZUM ÜBERTRAGEN DER IN EINEM GAS ENTHALTENEN WÄRME UND WÄRMETAUSCHER DAFÜR**
METHOD FOR TRANSFERRING THE HEAT CONTAINED IN A GAS, AND HEAT EXCHANGER FOR THIS PURPOSE
PROCÉDÉ POUR TRANSFÉRER LA CHALEUR CONTENUE DANS UN GAZ ET ÉCHANGEUR THERMIQUE CORRESPONDANT

(30) Priorität: 07.07.2017 CH 8862017; 24.01.2018 CH 822018
(43) Veröffentlichungstag der Anmeldung: 13.05.2020
(73) Patentinhaber: Synhelion SA, 6900 Lugano (CH); ENI S.p.A., 00144 Rome (IT)
(72) Erfinder: AMBROSETTI, Gianluca, 6925 Gentilino (CH); GOOD, Philipp, 8006 Zürich (CH)
(74) Vertreter: Stump, Beat
(86) Internationale Anmeldenummer: PCT/CH2018/050020
(87) Internationale Veröffentlichungsnummer: WO 2019/006565

(56) Entgegenhaltungen:
- EP-A2- 1 052 461
- WO-A1-2015/181594
- WO-A1-2016/171164
- DE-A1- 3 743 798
- FR-A1- 2 381 967
- NL-A- 7 703 915
- US-A- 3 604 400

## Beschreibung

Die vorliegende Erfindung betrifft ein Verfahren nach dem Oberbegriff von Anspruch 1, einen Wärmetauscher nach dem Oberbegriff von Anspruch 10 und ein Verfahren zum Betrieb eines Ofens nach dem Oberbegriff von Anspruch 16.

Solare Kraftwerke wie beispielsweise Solar-Turmkraftwerke arbeiten im industriellen Massstab, wie z.B. das eine Nennleistung von 392 MW aufweisende Solarkraftwerk Ivanpah in Kalifornien, welches direkt Dampf im Temperaturbereich von über 750 ⁰K bei 170 bar erzeugt, indem die konzentrierte Sonnenstrahlung auf Rohre eines im Turm angeordneten Wärmetauschers gerichtet wird, in welchen so der Dampf erzeugt wird. Wärmespeicher aus Salz erlauben, Dampf über die Phasen von guter Sonneneinstrahlung hinaus einsetzen zu können. Für einen höheren Wirkungsgrad werden zunehmend Solar-Turmkraftwerke vorgesehen, die über einen volumetrischen Receiver Luft auf über 1000 ⁰K, bis gegen 1500 ⁰K und, heute versuchsweise, gegen 2000 ⁰K und darüber erwärmen. Die erwärmte Luft wird dann über Wärmetauscher zur Erzeugung von Dampf oder Prozesswärme verwendet. Es ist weiter absehbar, dass beispielsweise solche Solar-Turmkraftwerke ebenfalls für einen Leistungsbereich in der Art von Ivanpah ausgelegt werden.

Andererseits ist bekannt, dass sich mit kleinen, lokalen Stand-Alone Anordnungen mit einem Dish-Receiver (die aber auch zu Clustern zusammengefasst werden können) ebenfalls Temperaturen über 1000 ⁰K, sogar über 2500 ⁰K hinaus mit einer Leistung im Bereich von Kilowattstunden erreichen lassen. Die Nutzung solcher Wärmequellen ist ebenfalls interessant. Der Natur der Sache nach wird die im Receiver von Solaranlagen anfallenden Strahlungswärme bei Temperaturen von über 1000 ⁰K in Form erhitzter Luft aus dem Receiver abtransportiert. Die Nutzung der so transportierten Wärme bedingt wiederum den Einsatz von nachgeschalteten Wärmetauschern. Der für einen Wärmetauscher zentrale, gute Wärmeübergang in das zu erwärmende Medium bedingt einen erheblichen Bauaufwand, meist verbunden mit einem erheblichen Strömungswiderstand im erwärmenden Medium.

Entsprechend ist es die Aufgabe der vorliegenden Erfindung, ein verbessertes Verfahren zum Übertragen der in einem Gas enthaltenen Wärme und einen verbesserten Wärmetauscher zu schaffen.

Das Dokument WO2015181594 A1 stellt den nächst-kommenden Stand der Technik für den Gegenstand der Anspruchs 1 dar. Das Dokument US 3 604 400 A stellt den nächst-kommenden Stand der Technik für die Gegenstände der Ansprüche 10 und 17 dar.

Diese Aufgabe wird gelöst durch ein Verfahren nach den kennzeichnenden Merkmalen von Anspruch 1, durch einen Wärmetauscher mit den kennzeichnenden Merkmalen von Anspruch 10 und einem Betriebsverfahren mit den kennzeichnenden Merkmalen von Anspruch 16.

Dadurch, dass ein Infrarotstrahlung emittierendes Gas verwendet wird, das in einen Absorberraum eines Wärmetauschers geführt wird, lässt sich dessen Wärme radiativ, d.h. über seine Infrarotstrahlung, mit genügender Leistung auf eine absorbierende Oberfläche des Wärmetauschers übertragen. Damit entfallen Verfahrensschritte und Anordnungen zur optimierten Wärmeübertragung durch Konvektion, die auf Grund des möglichst grossen Verhältnisses von konvektiven Oberflächen zum Volumen des Wärme abgebenden Gases aufwendig herzustellen sind und einen erheblichen Strömungswiderstand erzeugen.

Dadurch, dass ein durch Infrarotstrahlung Wärme abgebendes Gas in einen Absorberraum eines Wärmetauschers geführt wird, kann der angestrebte Wärmeübergang überwiegend absorptiv stattfinden, was erlaubt, den Wärmetauscher entsprechend einfach auszubilden. Dadurch, dass ein Ofen mit einer Zuleitung für indirekt erwärmtes, im Infrarotbereich strahlendes Gas versehen wird, kann dieser an Stelle von über Strahlung Wärme abgebenden Verbrennungsprodukten (Gase und insbesondere Russ, der auch in sichtbaren Frequenzbereich strahlt und damit die Flamme sichtbar macht) mit dem indirekte erwärmten Gas betrieben werden, was erlaubt, einen mit geringem Aufwand umgerüsteten Ofen schadstofffrei zu betreiben bzw. den Betrieb von Schadstoffe beseitigenden Anlagen zu ersparen und vorbestehende Infrastruktur mit geringen Modifikationen weiter zu benutzen.

Ist bezüglich der absorbierenden Oberfläche das Verhältnis ψ des Wärmestroms durch Absorption gegenüber dem gesamten durch sie fliessenden Wärmestrom ≥ 0,6, sind die oben gezeigten Vorteile besonders deutlich gegeben.

Infrarot strahlende Gase können insbesondere durch einen Receiver gemäss der noch nicht veröffentlichten CH Patentanmeldung 00627/17 erwärmt werden, der im Gegensatz zu den bekannten volumetrischen Receivern ein Gas absorptiv erhitzt. Solche, durch Strahlung in der Art von Schwarzkörperstrahlung erwärmbare Gase strahlen ihrerseits im Infrarotbereich und stehen dann, neben konventionell erwärmten infrarot strahlenden Gasen, in idealer Art zur Verfügung, um erfindungsgemäss verwendet zu werden.

Bevorzugte Ausführungsformen weisen die Merkmale der abhängigen Ansprüche auf.

Nachstehend wird die Erfindung anhand der Figuren näher erläutert.

Es zeigt:
- Fig. 1a: schematisch einen erfindungsgemässen Wärmetauscher im Querschnitt,
- Fig 1b: schematische eine Ansicht von aussen auf den Absorberraum eines Wärmetauschers in der Art desjenigen von Fig. 1a,
- Fig. 1c: schematisch eine modifizierte Ausführungsform des Wärmetauschers von Fig. 1a und b in der Ansicht von Fig. 1b,
- Fig 2a: das Schema einer Anlage mit einem Wärmespeicher und einem erfindungsgemässen Wärmetauscher,
- Fig 2b: die Schritte des erfindungsgemässen Verfahrens zum Übertragen der in einem Gas enthaltenen Wärme,
- Fig. 3a: schematisch eine Ansicht auf den Absorberraum eines erfindungsgemäss betriebenen, konventionellen Reformers
- Fig. 3b: die Schritte des erfindungsgemässen Betriebsverfahrens, und
- Fig. 4: einen Receiever gemäss zur Erzeugung von indirekt erwärmtem, infrarot strahlenden Gas.

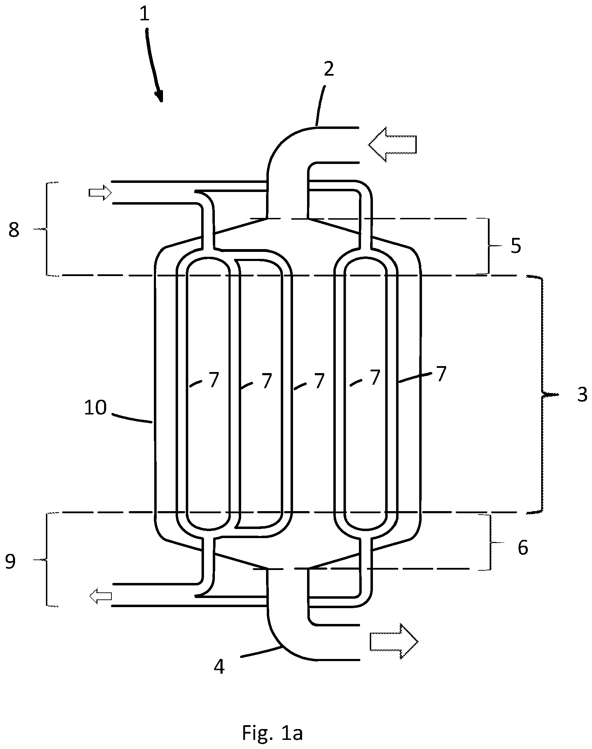

Figur 1a zeigt schematisch einen Querschnitt durch eine Ausführungsform eines Wärmetauschers 1 nach der vorliegenden Erfindung. Ein Wärme abgebendes, indirekt erwärmtes (s. dazu nachstehend) Gas gelangt über eine Zuleitung 2 entsprechend der eingezeichneten Pfeilrichtung in eine Absorberkammer 3, fliesst durch diese hindurch zu einer Ableitung 4, durch welche das Gas den Wärmetauscher 1 wieder verlässt, wobei in der gezeigten Ausführungsform die Zuleitung 2, die Absorberkammer 3 und die Ableitung 4 eine Anordnung zum Transport von Gas durch den Wärmetauscher 1 hindurch bilden.

Ein indirekt erwärmtes Gas gemäss der vorliegenden Erfindung ist vor dem Wärmetauscher 1 erwärmt worden, wobei seine im Absorberraum zu tauschende Wärme nicht aus der eigenen Verbrennung stammt - im Gegensatz zu einem im Absorberraum erzeugten Rauchgas, d.h. einem Verbrennungsprodukt, dessen zu tauschende Wärme durch einen in den Absorberraum wirkenden Verbrennungsvorgang entstanden ist.

Zwischen der Zuleitung 2 und der Absorberkammer 3 befindet sich ein Verteiler 5 für das die Absorberkammer 3 durchströmende Gas, derart, dass dieses über den ganzen Durchmesser der Absorberkammer 3 durch diese hindurchströmt. Ein Sammler 6 für das Gas führt dieses nach der Absorberkammer 3 in die Ableitung 4. Der Verteiler 5 und der Sammler 6 sind hier ebenfalls Bestandteile der Anordnung zum Transport von Gas durch den Wärmetauscher 1. Verteiler 5 und Sammler 6 können vom Fachmann im konkreten Fall geeignet ausgelegt werden.

Die Absorberkammer 3 ist bei der gezeigten Ausführungsform zylindrisch ausgebildet, das durchgeleitete Gas ist ein im Infrarotbereich strahlendes Gas bzw. ein Gasgemisch, das im Infrarotbereich strahlende Gase aufweist.

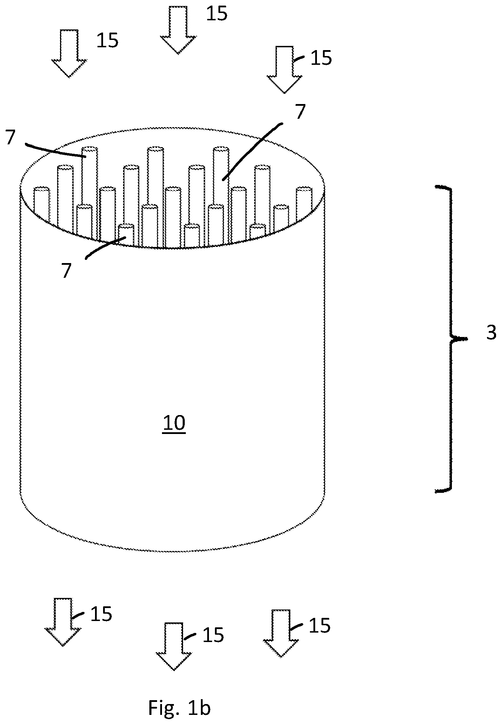

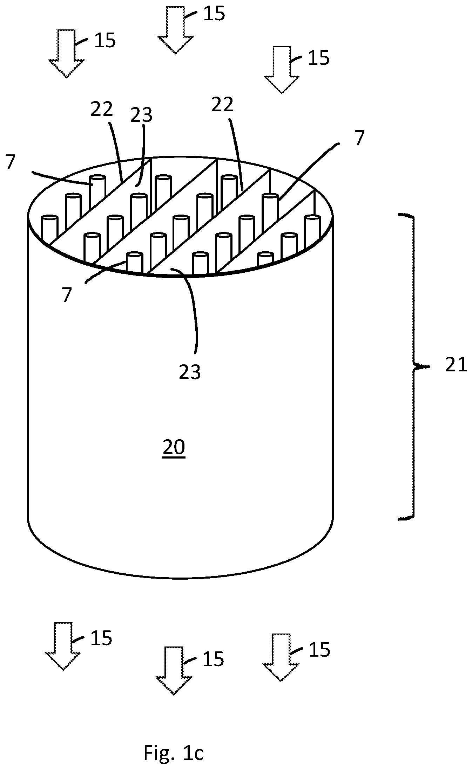

In der Absorberkammer 3 sind axial zu dieser verlaufende, hier als Rohre 7 ausgebildete Leitungen angeordnet, die ihrerseits von einem Verteiler 8 für zu erwärmende Fluide gespiesen werden und in einen Sammler 9 für die erwärmten Fluide münden. Wiederum können der Verteiler 8 und der Sammler 9 durch den Fachmann im konkreten Fall geeignet ausgelegt werden. Die Oberflächen der Rohre 7 bilden Infrarotstrahlung absorbierende Oberflächen. Falls nur ein Rohr 7 vorgesehen wird, ist mindestens eine absorbierende Oberfläche vorhanden, sonst mehrere, insbesondere im vorliegend gezeigten Fall mit einem Bündel von Rohren 7 (s. Figur 1b und 1c).

Den Wärmetauscher 1 und damit den Absorberraum 3 durchströmendes, warmes, im Infrarotbereich strahlendes Gas strahlt entsprechend auf die Oberflächen der Rohre 7, erwärmt diese, so dass ein Wärmetausch zwischen dem infrarot strahlenden Gas und den absorbierenden Oberflächen der Rohre 7 stattfindet, welche ihrerseits das sie durchströmende Fluid erwärmen. Die Rohre bilden damit eine für den Wärmetausch über Infrarotstrahlung vorgesehene Oberfläche - im Gegensatz beispielsweise zur Oberfläche der Wand 10 der Absorberkammer 3, welche trotz Isolation einen unerwünschten, nicht dem bezweckten Wärmetausch dienenden Wärmeverlust des Gases bewirkt, und sind die Infrarotstrahlung absorbierend ausgebildet, d.h. besitzen eine Oberfläche, die nicht als Reflektor ausgebildet ist

Im Infrarotbereich strahlende Gase sind beispielsweise CO₂, Wasserdampf, CH₄, NH₃, CO, SO₂, HCl, NO, und NO₂.

Generell ist es so, dass Gase elektromagnetische Strahlung in den für sie charakteristischen Frequenzbändern emittieren, wobei die Strahlungsintensität bzw. die Leistung der Strahlung pro Fläche in W/m² von der Temperatur abhängt.

Für feste Körper gilt das Modell des (idealen) strahlenden schwarzen Körpers ("black body radiation"), dessen Strahlungsintensität in W/ m² über das ganze Frequenzspektrum von seiner Temperatur abhängt, wobei sich das Intensitätsmaximum mit höherer Temperatur des schwarzen Körpers gegen höhere Frequenzen verschiebt und zugleich mit der vierten Potenz der Temperatur anwächst.

Bereits der reale feste Körper weist Einbrüche der Strahlung in seinem Frequenzspektrum gegenüber dem Frequenzspektrum des (idealen) schwarzen Körpers auf - für einen bestimmten realen festen Körper sinkt die Strahlungsintensität in für diesen charakteristischen Frequenzen teils erheblich ab.

Diesbezüglich extremere Eigenschaften besitzen Gase, welche nur in einzelnen Frequenzbändern strahlen, die im Ultraviolettbereich, im sichtbaren Bereich oder im Infrarotbereich liegen können. Strahlt ein Gas bei vergleichsweise niedriger Temperatur beispielsweise im Ultraviolettbereich, ist dessen Strahlungsintensität, d.h. die abgestrahlte Leistung, klein, strahlt es bei derselben Temperatur im Infrarotbereich, ist dessen Strahlungsintensität hoch. Erfindungsgemäss wird diese Eigenschaft der Gase genutzt, indem in heute technisch beherrschbaren Temperaturbereichen von bis zu 2500 ⁰K oder darüber (in den kommenden Jahren werden sich diese Temperaturbereiche nach oben verschieben) im Infrarotbereich strahlende Gase eingesetzt werden, wobei dann deren Strahlungsintensität erheblich und damit für den Wärmetausch effizient nutzbar wird.

Dadurch lässt sich neben den weiter unten angegebenen Vorteilen ein sehr einfacher und dennoch effizienter Wärmetauscher ausbilden, der die Wärme von einem im Infrarotbereich strahlenden Gas auf ein anderes Medium überträgt. Unter anderem (s. dazu unten) entfällt der übliche Konstruktionsaufwand für den konvektiven Wärmeübergang, der durch Kontakt erfolgt und entsprechend eine grosse wärmetauschende Fläche im Verhältnis zum Volumen des Wärme abgebenden Gases bedingt.

Die Anmelderin hat gefunden, dass sich die konstruktiven Vorteile des Wärmetauschs durch Emission/Absorption vor allem dann auswirken, wenn das Verhältnis ψ des durch Absorption getauschten Wärmestroms gegenüber dem gesamten (durch Absorption und Konvektion) getauschten Wärmestroms ≥ 0,6 ist, also der Anteil der Absorption gegenüber dem Anteil der Konvektion überwiegt. Dabei ist ein Wärmetausch durch Konvektion auch bei einfachster Realisierung des Wärmetauschers nicht vermeidbar und, im Sinn des Wärmetauschs, auch durchaus willkommen. Je geringer jedoch der Anteil der Konvektion ausfällt, desto grösser ist die konstruktive Vereinfachung bzw. kleiner der Aufwand für die Herstellung und allenfalls den Unterhalt des Wärmetauschers selbst. Der Fachmann kann im konkreten Fall die bestimmenden Parameter (das infrarot strahlende Gas bzw. die Gasmischung, dessen Temperatur, Druck und Strömungsgeschwindigkeit, die Geometrie des Absorberraums und der mindestens einen absorbierenden Oberfläche etc.) geeignet auslegen, um das Verhältnis ψ ≥ 0,6 einzustellen und die erfindungsgemässen Vorteile zu realisieren.

An dieser Stelle sei angemerkt, dass die gezeigte Ausführungsform mit fünf Rohren 7 im Durchmesser der zylindrischen Absorberkammer 3 rein beispielhaft zu verstehen ist, um die Verhältnisse zu erläutern. So ist es beispielsweise möglich eine beliebige Anzahl von durch den Absorberraum hindurch führenden Leitungen in an sich beliebiger Konfiguration und beliebigem Verlauf (d.h. nicht nur axial verlaufend) vorgesehen werden, sofern dadurch immer noch der Anteil der absorptiven Wärmeaufnahme überwiegt, d.h. das Verhältnis ψ ≥ 0,6 realisiert ist.

Erfindungsgemäss ergibt sich dann ein Verfahren zum Wärmetausch von in einem Fluid enthaltener Wärme, wobei als Fluid ein indirekt erwärmtes, Infrarotstrahlung emittierendes Gas verwendet wird, das über eine Zuleitung (2) zum Wärmetauscher (1) und in diesem durch einen Absorberraum (3) hindurch geführt wird, wobei im Absorberraum (3) wenigstens eine zur Nutzung der Wärme des Gases dessen Infrarotstrahlung absorbierende Oberfläche vorgesehen wird, und wobei der Massenstrom und die Temperatur des Gases derart eingestellt und die wenigstens eine für den Wärmetausch absorbierende Oberfläche derart ausgebildet wird, dass im Betrieb das Verhältnis ψ des durch sie fliessenden Wärmestroms durch Absorption gegenüber dem gesamten sie durchfliessenden Wärmestrom ≥ 0,6 ist.

Ein Wärmetauscher zum Ausführen dieses Verfahrens besitzt eine Anordnung zum Transport von im Wärmetauscher durch Infrarotstrahlung Wärme abgebendem Gas, die einen Absorberraum aufweist mit wenigstens einer für den Wärmetausch über Infrarotstrahlung vorgesehenen Oberfläche, wobei der Wärmetauscher mit einer Zuleitung für indirekt erwärmtes, Wärme abgebendes Gas ausgebildet ist und der Absorberraum und die wenigstens eine absorbierende Oberfläche derart ausgebildet sind, dass im Betrieb bei einem vorbestimmten Massenstrom und einer vorbestimmten Temperatur des Wärme abgebenden Gases in der absorbierenden Oberfläche das Verhältnis ψ des sie durchfliessenden Wärmestroms durch Absorption gegenüber dem gesamten sie durchfliessenden Wärmestrom ≥ 0,6 ist. Dabei ist der Wärmetauscher bevorzugt mit einer Anordnung zum Transport von im Wärmetauscher durch Infrarotstrahlung Wärme abgebendes Gas ausgebildet, die einen Absorberraum (3) aufweist mit wenigstens einer für den Wärmetausch über Infrarotstrahlung vorgesehenen Oberfläche, und einem durch die Anordnung strömenden durch Infrarotstrahlung Wärme abgebendes, indirekt erwärmtes Gas, wobei der Wärmetauscher mit einer Zuleitung für indirekt erwärmtes, Wärme abgebendes Gas ausgebildet ist und der Absorberraum und die wenigstens eine absorbierende Oberfläche derart ausgebildet und der Massenstrom und die Temperatur des Wärme abgebenden Gases derart eingestellt sind, dass in der absorbierenden Oberfläche das Verhältnis ψ des sie durchfliessenden Wärmestroms durch Absorption gegenüber dem gesamten sie durchfliessenden Wärmestrom ≥ 0,6 ist.

Dazu kann beispielsweise der Wärmetauscher mit einer entsprechenden Steuerung versehen sein, welche den Massenstrom durch den Absorberraum steuert, wobei bevorzugt ein Temperatursensor für die Temperatur des dem Wärmetauscher zuströmenden, Wärme abgebenden Gases vorgesehen wird, der ein entsprechendes Temperatursignal für die Steuerung generiert, die dann den Massenstrom einstellt bzw. regelt. Die Steuerung ist nicht notwendigerweise im Wärmetauscher integriert, sondern kann sich an einem geeigneten Ort in der Anlage, in welcher der Wärmetauscher eingesetzt wird, befinden. Der Fachmann kann die Steuerung für den konkreten Fall geeignet ausbilden, einschliesslich der Sensoren für die durch die Steuerung zu verarbeitenden Daten, so dass das Verhältnis ψ≥ 0,6 vorliegt.

Figur 1b zeigt eine Ansicht von aussen auf die Absorberkammer 3 des Wärmetauschers 1 von Figur 1a. Ersichtlich sind die zylindrische Wand 10 der Absorberkammer 3, sowie die Rohre 7, die in einem räumlichen Bündel neben einander verlaufend angeordnet sind und so den zylindrischen Absorberraum 3 bei der gezeigten Ausführungsform etwa gleichmässig ausfüllen. Aus verfahrenstechnischen Gründen kann auch eine andere Anordnung vorgesehen werden., Die Rohre 7 werden im Betrieb des Wärmetauschers 1 (Figur 1a) vom axial durchströmenden, durch die Pfeile 15 symbolisierten, infrarot strahlenden Gas (beispielsweise Wasserdampf) über ihre Länge im Wesentlichen absorptiv erhitzt werden. In den Rohren selbst fliessen hier in derselben Richtung, wie sie durch die Pfeile 15 angegeben ist, beispielsweise Komponenten für die (katalytische) Herstellung von Syngas oder andere chemisch reagierenden Stoffe, oder einfach ein Fluid, welches die ausgetauschte Wärme etwa im Sinn eines Sekundärkreislaufs an einen geeigneten Ort führen kann, wie dies beispielsweise bei Prozesswärme der Fall sein kann.

Im Fall der Herstellung von Syngas stellt die in den Figuren 1a und 1b gezeigte Anordnung einen Reformer mit erfindungsgemäss realisiertem Wärmetausch dar. Für die Syngasherstellung werden hohe Temperaturen benötigt, beispielsweise eine durchschnittliche Rohrtemperatur von 1200 ⁰K. Vorliegend wird dazu im Sinn eines einfachen Ausführungsbeispiels ein ein äusserer Rohrdurchmesser von 130 mm, ein innerer Rohrdurchmesser von 100 mm und eine Rohrlänge von hier 12 m (d.h. einer Höhe der Absorberkammer 3 von 12m) angenommen, wobei der Wärmestrom q in ein Rohr 7 hinein 100 kW/m² der Rohroberfläche betragen soll (was natürlich vom jeweiligen im Rohr stattfindenden Prozess abhängt). Weiter sei angenommen, dass der Abstand der Rohre vom Zentrum zum Zentrum der sechsfache Aussendurchmesser der Rohre betrage, also 780 mm, und der Abstand eines äussersten Rohrs zur Wand 10 der Absorberkammer 3 die Hälfte, also 390 mm. Damit besitzt der Absorberraum 3 einen Durchmesser von 3,9 m. Der Partialdruck des infrarot strahlenden Gases betrage 1 bar, wobei der im angenommenen Beispiel durchströmende Wasserdampf den Umgebungsdruck von 1 bar aufweist(es sind also keine nicht strahlenden Gase beigemischt).

Eine überschlägige Rechnung der Anmelderin ergibt unter den obigen Annahmen die in der nachstehenden Tabelle wiedergegebenen Werte für das Verhältnis ψ anhand von zwei Beispielen, mit verschiedener Temperatur des zur Verfügung stehenden, indirekt erwärmten Gases:

| | | | |
|---|---|---|---|
| Tᵢₙ | (Einlasstemperatur des Gases) | 1700 ⁰K | 1580 ⁰K |
| Tₒᵤₜ | (Auslasstemperatur des Gases) | 1340 ⁰K | 1460 ⁰K |
| v | (Strömungsgeschwindigkeit) | 7,1 m/s | 21,1 m/s |
| ψ | (Verhältnis Absorption / Absorption + Konvektion) | 0,97 | 0,94 |
| T_{Gas} | Durchschnittstemperatur des Gases für die Überschlagsrechnung | 1520 ⁰K | 1520 ⁰K |

Damit ist der Wärmetausch erfindungsgemäss durch den gezeigten Wärmetauscher 1 (Figur 1a) realisierbar. Es sei angemerkt, dass unter der Überschlagsrechnung gleichförmige Bedingungen im Absorberraum 3 angenommen worden sind, also die Effekte an der Wand 10 sowie der reale Temperaturverlauf vom Einlass bis zum Auslass der Rohre 7 (also der Achse des zylindrischen Absorberraums 3 entlang) vernachlässigt worden sind. Dies ändert aber nichts an der grundsätzlichen Machbarkeit.

Je nach Reaktion (wie oben erwähnt: beispielsweise eine Syngasreaktion) bzw. den Bedürfnissen des Wärme aufnehmenden Fluids herrscht in den Leitungen (Rohren 7) ein Überdruck von beispielsweise 40 bar, wobei auch ein höherer Überdruck von beispielsweise 100 bar wünschenswert sein kann. Dann steigen die Wandstärken der entsprechend druckfest auszubildenden Leitungen (Rohre 7) entsprechend an, was wiederum nachteilig für den Wärmestrom in die Leitung hinein ist, so dass beispielsweise die Temperatur des infrarot strahlenden Gases erhöht werden muss, um den gewünschten Wärmestrom (im vorliegenden Beispiel 100 kW/m²) zu halten.

Nach dem erfindungsgemässen Konzept des Absorberraums 3 (bzw. des Wärmetauschers 1, Fig. 1a) können die durch den Absorberraum 3 geführten Leitungen 7 kompakt gebündelt werden, beispielsweise so, dass der Absorberraum 3 durch eine rohrförmige Wand 10 begrenzt wird. Dies wiederum erlaubt, den Absorberraum 3 vergleichsweise einfach auf höheren oder hohen Druck auszulegen, da dann in einem rohrförmigen Wandbereich druckbedingt im Wesentlichen konstruktiv einfacher zu beherrschende Tangentialspannungen auftreten. Herrscht im Absorberraum 3 Überdruck, verringert sich die Druckdifferenz zum Innendruck der Leitungen (Rohre 7). Entsprechend können die Wandstärken der Leitungen verringert und damit der Wärmestrom in die Leitungen hinein verbessert werden.

Es ergibt sich ein erfindungsgemässer Wärmetauscher mit einer Anordnung zum Transport von im Wärmetauscher durch Infrarotstrahlung Wärme abgebendes Gas, die einen Absorberraum aufweist mit wenigstens einer für den Wärmetausch über Infrarotstrahlung vorgesehenen Oberfläche, dadurch gekennzeichnet, dass der Wärmetauscher mit einer Zuleitung für indirekt erwärmtes, Wärme abgebendes Gas ausgebildet ist und der Absorberraum und die wenigstens eine absorbierende Oberfläche derart ausgebildet sind, dass im Betrieb bei einem vorbestimmten Massenstrom und einer vorbestimmten Temperatur des Wärme abgebenden Gases in der absorbierenden Oberfläche das Verhältnis ψ des sie durchfliessenden Wärmestroms durch Absorption gegenüber dem gesamten sie durchfliessenden Wärmestrom ≥ 0,6 ist.

Es ergibt sich weiter, dass bevorzugt die wenigstens eine absorbierende Oberfläche durch eine Anzahl Leitungen, bevorzugt Rohrleitungen, gebildet ist, und wobei die Leitungen als Bündel angeordnet sind, das sich durch den Absorberraum erstreckt, und zwischen den Leitungen Raum für betriebsfähig durchströmendes, infrarot strahlendes abgebendes Gas vorgesehen ist.

Es ergibt sich weiter, dass bevorzugt der Absorberraum druckfest, für einen Druck des Wärme abgebenden Gases von >_ 5 bar, bevorzugt >_ 10 bar, besonders bevorzugt >_ 20 bar und ganz bevorzugt ≥ 50 bar ausgelegt ist.

Eine Überschlagsrechnung unter den oben stehenden Annahmen für die Dimensionen der Rohre 7 und des Wärmestroms von 100 kW/m² ergibt für einen Betriebsdruck im Absorberraum 3 von 10 bar, wenn Wasserdampf als infrarot strahlendes Gas verwendet wird:

| | | |
|---|---|---|
| Tᵢₙ | (Einlasstemperatur des Gases) | 1620 ⁰K |
| Tₒᵤₜ | (Auslasstemperatur des Gases) | 1340 ⁰K |
| v | (Strömungsgeschwindigkeit) | 3,8 m/s |
| ψ | (Verhältnis Absorption / Absorption + Konvektion) | 0,9 |
| T_{Gas} | Durchschnittstemperatur des Gases für die Überschlagsrechnung | 1480 ⁰K |

Die Emissivität ε eines Gases steigt mit dessen Druck p und der Dicke L der strahlenden Gasschicht (path length), es gilt ε = f (p, L). Die dimensionslose Kurve der Emissivität zeigt die Form eines umgekehrten Hokeystocks, mit starker Steigung bei geringer path length (L) und schwacher Steigung in gewisser Entfernung von der die Strahlung aufnehmenden Wand, also grösserer path length. Mit steigendem Druck lassen sich also die Abstände von Rohr 7 zu Rohr 7 verringern, im Vorliegenden Beispiel auf 390 mm, was bei einem Betriebsdruck im Absorberraum 3 von 10 bar zu einem Durchmesser von 1,95 m führt - also der Hälfte des Durchmessers des Absorberraums 3 gegenüber dem Fall mit einem Betriebsdruck von 1 bar. Diese geringeren Dimensionen unterstützen die druckfeste Auslegung des Absorberraums - was wiederum noch höhere Drücke in diesem erleichtert. Der Fachmann kann im konkreten Fall beispielsweise ausgehend vom optimalen Innendruck in den Leitungen 7 und deren Wandstärke (Wärmetransport) einen Betriebsdruck im Absorberraum 3 in Abwägung des Aufwands für die Drucksicherheit und dem Wärmetransport in die Leitungen 7 hinein bestimmen.

Es sei an dieser Stelle angemerkt, dass in den oben quantitativ beschriebenen Beispielen das Verhältnis ψ im Bereich von 0,9 und darüber liegt - unter anderem auch wegen der hohen Temperaturen des indirekt erwärmten Gases von über 1500 ⁰K. Das erfindungsgemässe Verhältnis von ψ ≥ 0,6 ist aber nach den Erkenntnissen der Anmelderin auch erreichbar mit Temperaturen des indirekt erwärmten Gases von ≥ 1000 ⁰K, beispielsweise 1300 ⁰K oder, gemässen Beispielen oben von mehr als 1500 ⁰K. Es ergibt sich, dass erfindungsgemäss bevorzugt das indirekt erwärmte Gas eine Temperatur von ≥ 1000 ⁰K, bevorzugt ≥ 1300 ⁰K und besonders bevorzugt ≥ 1500 ⁰K aufweist.

Fig. 1c zeigt eine Ansicht von aussen auf die Absorberkammer 3 einer weiteren Ausführungsform des Wärmetauschers 1 von Figur 1a. Ersichtlich sind wie bei Fig. 1b die zylindrische Wand 20 der Absorberkammer 21, sowie die Rohre 7, die in einem räumlichen Bündel neben einander verlaufend angeordnet sind und so den zylindrischen Absorberraum 21 ausfüllen.

Gegenüber der Ausführungsform von Fig. 1b sind zusätzlich Wände 22 vorgesehen, welche zwischen den Rohren 7 angeordnet sind. Diese Wände 22, bzw. deren Oberflächen 23, werden im Betrieb vom infrarot strahlenden Gas durch dessen Infrarotstrahlung aufgeheizt, bis sich ein Temperaturgleichgewicht einstellt, da die Wände 22 ihrerseits durch (reale) Schwarzkörperstrahlung Energie verlieren. Diese Schwarzkörperstrahlung erwärmt nun vorteilhaft die Leitungen bzw. hier Rohre 7. Es sei angemerkt, dass bereits die Wand 20 des Absorberraums in diesem Sinn wirkt, die Wände 22 jedoch zusätzliche, separate Wände mit zusätzlichen, von der Wand des Absorberraums 20 separaten Oberflächen 23 sind.

Oben ist erwähnt, dass die Kurve der Emissivität ε einen ersten Bereich mit starkem Anstieg und einen zweiten Bereich mit schwachem Anstieg aufweist, wobei natürlich der Übergang nicht scharf ist. Dies bedeutet, dass die in eine Wand eingestrahlte Energie mit zunehmender Dicke (path length L) der strahlenden Gasschicht zuerst stark anwächst, danach, nach einer unter anderem vom Gas abhängenden Dicke zunehmend schwächer wird (aber immerhin immer noch anwächst). Dies kann so interpretiert werden, dass das Gas sich selbst isoliert, mit anderen Worten ein von der Wand weiter weg liegender Gasbereich weniger gut in der Lage ist, über seine Strahlung Energie an die Wand abzugeben. Wird nun in einem geeigneten Bereich eine weitere Wand angeordnet, die sich ebenfalls erwärmt und dann (reale) Schwarzkörperstrahlung emittiert, wird diese wenigstens in den Frequenzbereichen, in denen das infrarot strahlende Gas nicht absorbiert, die zu erwärmende Wand praktisch ungehindert erreichen (für diese Frequenzen entfällt der isolierende Effekt) und diese damit ungeschwächt erwärmen. Im Ergebnis erhöht sich dadurch der durch die absorbierenden Oberflächen der Leitungen fliessende Wärmestrom q. Der Fachmann kann im konkreten Fall solch eine weitere Wand in einem Abstand hier zu den absorbierenden Oberlflächen (hier: der Reihe von Rohren 7) anordnen, der im Bereich des schwachen Anstiegs der Emissivität ε des infrarotstrahlenden Gases liegt, und weiter so, dass die Intensität der Schwarzkörperstrahlung der weiteren Wand an den absorbierenden Oberflächen grösser ist als es die Intensität der durch die weitere Wand abgeschnittenen, infrarot strahlenden Gasschicht (zusätzliche Instensität durch die abgeschnittene path length L) wäre.

Es sei an dieser Stelle angemerkt, dass die Leitungen bzw. Rohre 7 zwar ihrerseits ebenfalls Schwarzkörperstrahlung emittieren, jedoch auf einer vergleichsweise tiefen Temperatur, da sie auf Grund des in ihnen fliessenden, zu erwärmenden Fluids Wärmesenken sind. Die oben erwähnten weiteren Wände erreichen eine Gleichgewichtstemperatur über der Temperatur der Leitungen 7 bzw. der mindestens einen absorbierenden Oberfläche im Absorberraum, so dass durch diese bei der erwähnten, geeigneten Anordnung die Wärmeeinstrahlung auf die mindestens eine absorbierende Oberfläche verbessert werden kann.

Zusammenfassend sind im Absorberraum eine Anzahl in diesem verteilte Leitungen mit je einer absorbierenden Oberfläche angeordnet sind und wenigstens eine im Betrieb durch das Wärme abgebende Gas ihrerseits erwärmbare weitere Oberfläche vorgesehen, die im Betrieb durch Schwarzkörperstrahlung die absorbierenden Oberflächen bestrahlt, derart, dass der Wärmestrom q durch Absorption durch die absorbierenden Oberflächen erhöht wird.

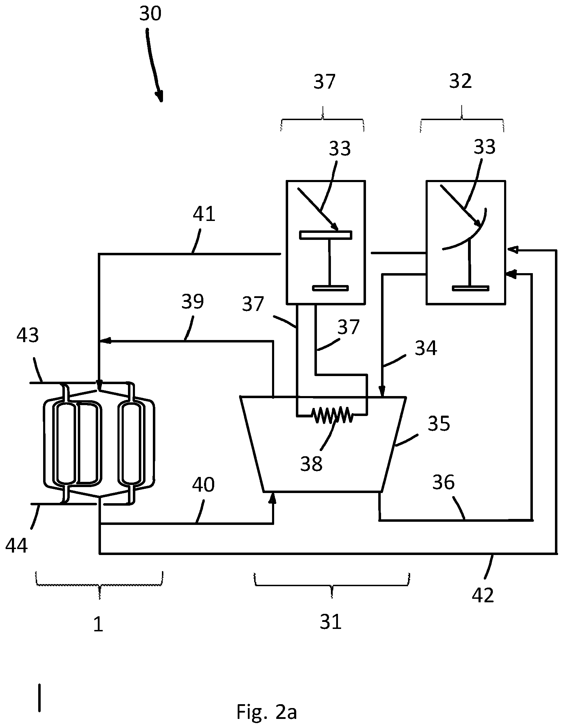

Figur 2a zeigt schematisch die Anordnung einer Anlage 30 für die Nutzung von Solarenergie mit einem erfindungsgemässen Wärmetauscher 1, einem Wärmespeicher 31 sowie einem Receiver 32 für (konzentrierte) Sonnenstrahlung und einem photovoltaischen Receiver 37.

Im Receiver 32 wird durch einfallende Sonnenstrahlung 33 ein geeignetes Fluid erwärmt, beispielsweise auf eine Temperatur über 1000 ⁰K, oder bis über 2000 ⁰K, gelangt über eine Leitung 34 in einen Wärmespeicher 35 und über eine Leitung 36 wieder zurück in den Receiver 32, so dass über den entsprechenden Kreislauf via die Leitungen 34,36 der Wärmespeicher 35 mit Wärme beladen werden kann. Eine photvoltaische Anlage bzw. ein photovoltaischer Receiver 37 generiert durch Einfall von Sonnenstrahlen 33 Strom, der über Stromleitungen 37 und eine elektrische Heizung 38 bei Bedarf Wärme der gewünschten Temperatur im Wärmespeicher 31 bereitstellt, insbesondere in der Lage ist, im Wärmespeicher eine gleichmässige obere Temperatur in Bereichen bei beispielsweise 2000 ⁰K zu halten. Durch die Wärme des Wärmespeichers 31 wird dann ein infrarot strahlendes Gas erwärmt und über die Leitungen 39,40 im Kreislauf durch den Wärmetauscher 1 geführt.

Bevorzugt wird jedoch bereits durch den Receiver 32 ein infrarot strahlendes Gas erwärmt, welches über Leitungen 41,42 im Kreislauf durch den Wärmetauscher 1 geschickt, d.h. diesem wahlweise direkt zugeführt wird, je nachdem, ob noch der Wärmespeicher 38 beladen werden soll oder nicht.

Im Wärmetauscher 1 wird ein Fluid erwärmt, das über die Leitungen 43,44 durch diesen hindurch fliesst. Dabei kann es sich, wie oben erwähnt, generell um Prozesswärme irgendwelcher Art, um Edukte/Produkte für eine chemische Reaktion oder um Dampf zum Antrieb einer Dampfturbine (Strom) handeln. Ein Vorteil der gezeigten Anlage 30 besteht beispielsweise in einer einfachen Temperaturkontrolle des dem Wärmetauscher 1 zugeführten, infrarot strahlenden Gases: zur Abkühlung kann dem Kreislauf (direkt via Receiver 32 oder über den Wärmespeicher 35) solches, nicht erhitztes Gas zugemischt werden, zur Erwärmung steht die elektrische Heizung 38 zur Verfügung, die als solche grundsätzlich auch dann sehr hohe Temperaturen erzeugen kann, auch wenn die Strahlungsintensität der Sonne unter der Schwelle liegt, welche der Receiver 32 für die gewünschte sehr hohe Temperatur benötigen würde. Ein weiterer Vorteil der gezeigten Anlage besteht darin, dass sich die infrarot strahlenden Gase mit vergleichsweise einfachem konstruktiven Aufwand auch unter Druck in dem gezeigten Kreislauf führen lassen, wobei die Wärmeübertragung im Wärmetauscher 1 ebenfalls mit geringem Aufwand realisierbar ist.

Die gezeigte Anlage kann also mit jeweils nur einer Wärmequelle für das indirekt erwärmte Gas betrieben werden (solarer Receiver 32 oder Wärmespeicher 38) oder im Verbund dieser Wärmequellen, wenn gewünscht zusätzlich mit der Heizung 38.

Es ergibt sich, dass bei der gezeigten Ausführungsform die Anordnung zum Transport des Wärme abgebenden Gases betriebsfähig (z.B. in einem Kreislauf) mit einer das Gas indirekt erwärmenden Wärmequelle verbunden ist, welche bevorzugt einen Wärmespeicher aufweist.. Weiter weist die Wärmequelle wenigstens eines der Wärme produzierenden Mittel solarer Receiver, Wärmespeicher oder eine bevorzugt elektrische, besonders bevorzugt durch photovoltaischen Strom gespiesene Heizung auf. Für das erfindungsgemässe Verfahren ergibt sich, dass bevorzugt das Infrarotstrahlen emittierende Gas in einem den Wärmetauscher einschliessenden Kreislauf geführt wird, in welchem das Gas indirekt erwärmt wird, und wobei weiter bevorzugt in diesem Kreislauf vor dem Wärmetauscher ein Wärmespeicher vorgesehen wird. Zudem ergibt sich, dass für die indirekte Erwärmung wenigstens eine der Wärmequellen Receiver, Wärmespeicher oder Heizung, bevorzugt eine elektrische Heizung, die besonders bevorzugt photovoltaisch gespiesen ist, verwendet wird.

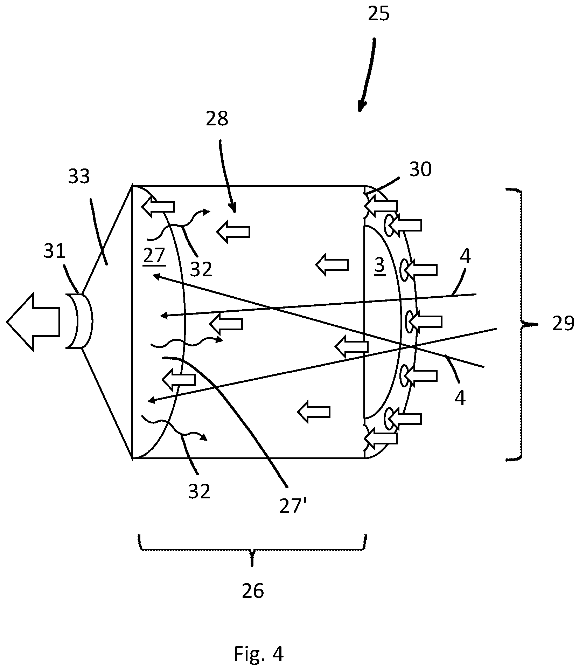

Der Receiver 32 kann als Receiver eines Solar - Turmkraftwerks ausgebildet werden, s. dazu die Beschreibung zu Figur 4 unten. Der Wärmespeicher 35 kann gemäss der WO 2012/027854 ausgebildet werden, wobei das Schüttgut aus Al₂O₃ bestehen kann (die heute üblichen Salz-Wärmespeicher sind für Temperaturen gemäss der vorliegenden Erfindung nicht geeignet, da sich dann das Salz zersetzt). Photovoltaische Solraranlagen sind dem Fachmann bekannt.

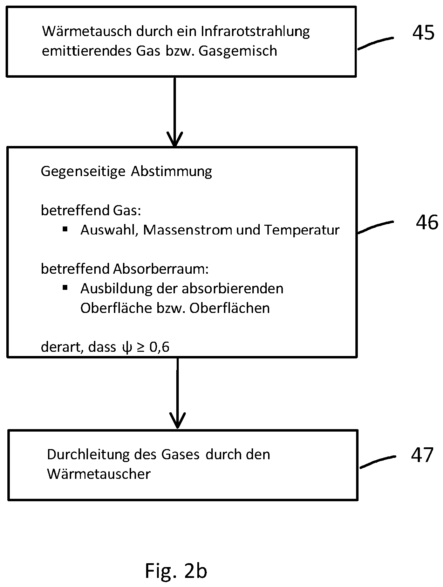

Figur 2b zeigt die Schritte des erfindungsgemässen Verfahrens zum Wärmetausch. In Schritt 45 wird als Wärme abgebendes Gas ein Gas ausgewählt, dessen zu tauschende Wärme nicht aus seiner Verbrennung entstanden ist, und das vor dem Wärmetauscher erwärmt worden ist, also ein indirekt erwärmtes Gas ist, und das Infrarotstrahlung emittiert, um über diese Strahlung die Wärme zu tauschen. Bevorzugt sind solche Gase heteropolare Gase. Geeignet sind CO₂, Wasserdampf, CH₄, NH₃, CO, SO₂, HCl, NO, und NO₂ oder ein Gemisch dieser Gase. Nicht strahlende Gase können im konkreten Fall zugemischt werden, wenn dies aus verfahrenstechnischen Gründen angezeigt ist, jedoch in den durch das Verhältnis ψ angezeigten Grenzen.

In Schritt 46 werden für den konkreten Fall das Gas (bzw. Gasgemisch) ausgewählt, der Massenstrom (Strömungsgeschwindigkeit und Druck) und seine Temperatur mit der jeweiligen Ausbildung der absorbierenden Oberflächen im Absorberraum gegenseitig derart abgestimmt, dass das Verhältnis ψ des dem Austausch dienenden Wärmestroms durch Absorption zum gesamten ausgetauschten Wärmestrom ≥ 0,6 ist, also die Absorption gegenüber der Konvektion überwiegt. Bevorzugt werden die absorbierenden Oberflächen durch die Oberflächen von Leitungen 7 gebildet, die durch den Absorberraum 3 (Figuren 1a bis 1c) führen, wobei besonders bevorzugt ein (räumliches) Bündel von Leitungen vorgesehen wird, da das Gas dieses gut umfliessen kann. In den Leitungen wird das zu erwärmende Fluid geführt. Die absorbierende Oberfläche kann auch durch einen Wandabschnitt des Absorberraums gebildet werden, oder durch eine oder mehrere Leitungen (bevorzugt Rohrleitungen) für ein durch den Wärmetausch zu erwärmendes Fluid. Je höher das das Verhältnis ψ gewählt wird, z.B. ≥ 0,7, bevorzugt >_ 0,8 und besonders bevorzugt >_ 0, 9, desto einfacher lässt sich der Wärmetauscher ausbilden. Wird das Gas unter Überdruck durch den Absorberraum geführt (bevorzugt ≥ 5 bar, bevorzugt ≥ 10 bar, besonders bevorzugt ≥ 20 bar und ganz bevorzugt ≥ 50 bar), kann der erfindungsgemässe Wärmetauscher besonders kompakt ausgebildet werden.

Im Schritt 47 wird der vorbereitete Wärmetausch ausgeführt, indem das ausgewählte Gas bzw. Gasgemisch mit unter den vorbestimmten Betriebsparametern durch Absorberraum mit den geeignet ausgebildeten Absorberflächen geleitet wird.

Es ergibt sich, dass bevorzugt das das Infrarotstrahlen emittierende Gas in einem den Wärmetauscher einschliessenden Kreislauf geführt wird, in welchem das Gas indirekt erwärmt wird, und wobei bevorzugt in diesem Kreislauf vor dem Wärmetauscher ein Wärmespeicher vorgesehen wird. Im Fall der solaren Erwärmung des Gases kann dieses damit auch ausserhalb der Zeiten mit intensiver Sonnenstrahlung zur Verfügung gestellt werden. Weiter wird bevorzugt für die indirekte Erwärmung wenigstens eine der Wärmequellen Receiver, Wärmespeicher oder Heizung, bevorzugt eine elektrische Heizung, die besonders bevorzugt photovoltaisch gespiesen ist, verwendet, womit sich sich eine vorteilhafte Unabhängigkeit von der Intensität der jeweils herrschenden Sonnenstrahlung ergibt.

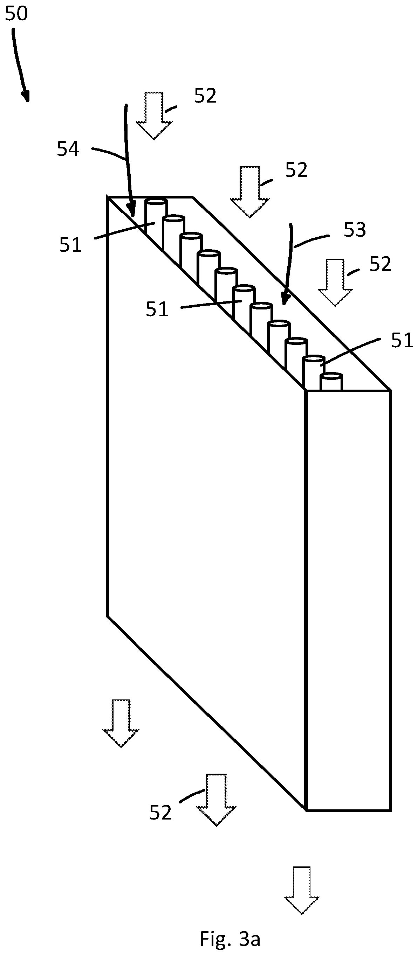

Figur 3a zeigt schematisch die Absorberkammer (oder Wärmekammer) 50 eines erfindungsgemäss betriebenen, konventionellen Reformers. Reforming dient der chemischen Umwandlung in der Verfahrenstechnik und wird oft als endothermer Prozess katalytisch durchgeführt. Bekannt sind insbesondere "tubular reformer", d.h. Reforminganlagen, in denen die zu verarbeitenden Stoffe in Rohren durch eine Wärmekammer geführt werden, so dass die für den chemischen Prozess benötigte Wärme durch die Rohre hindurch den Stoffen zugeführt werden kann. Die Wärme wird durch Brenner erzeugt, die Verbrennungsprodukte enthalten oft im Infrarotbereich strahlenden Russ und ebenfalls im Infrarotbereich strahlende Gase.

Die Wärmekammer, welche einen Ofen darstellt, ist rechteckig - langgestreckt ausgebildet. Der Mittellinie der Wärmekammer entlang sind die Rohre in einer Reihe hintereinander angeordnet, so dass auf beiden Seiten der Rohre eine langgestreckte Teilkammer besteht, in welche die durch die Brenner erzeugten Flammen hinein wirken. Beim "Top Fired" Prinzip ragen die Flammen von oben in die Teilkammern, beim "Terraced Wall" Prinzip sind die Brenner auf Stufen der Aussenwände der Teilkammern angeordnet, und beim "Side fired" Prinzip sind die Brenner über die Aussenwände verteilt angeordnet. Nachteilig ist diesem Prinzip, dass die Temperatur über die Länge der Rohre schwer kontrollierbar ist (hohe Temperaturen am Ort der Flamme, danach starker Temperaturabfall) und dass genügend Raum für die ungestörte Entwicklung der Flamme vorhanden sein muss. Schliesslich ergibt sich durch dieses Prinzip auch, dass in einer Wärmekammer die Rohre in Reihen angeordnet werden, um ein effizientes Verhältnis zwischen dem Bereich der Flammen und dem Bereich der durch die Rohre geschaffenen, absorbierenden Oberflächen zu bilden.

Erfindungsgemäss wird nun ein konventioneller Reformer mit einer Wärmekammer 50, in welcher Rohre 51 hinter einander, in Reihe verlaufend, angeordnet sind, mit einer Zuleitung für indirekt erwärmtes, im Infrarotbereich strahlendes Gas versehen und die Verbrennungsanordnung nicht verwendet, d.h. für den vorgesehenen Betrieb des Ofens, und damit des Reformers, still gelegt oder ausgebaut. Das Gas strömt gemäss den Pfeilen 52 durch die Teilkammern 53,54 beidseits der Reihe aus Rohren 51 (und natürlich auch zwischen den Rohren) hindurch und erwärmt diese durch seine Infrarotstrahlung.

Für eine Überschlagsrechnung wird wiederum angenommen, dass im Reformer Syngas hergestellt werden soll, wobei dazu beispielsweise wiederum eine durchschnittliche Rohrtemperatur von 1200 ⁰K benötigt wird. Wie zu Figur 1b wird ein ein äusserer Rohrdurchmesser von 130 mm, ein innerer Rohrdurchmesser von 100 mm und eine Rohrlänge von hier 12 m (d.h. einer Höhe der Wärmekammer 50 von 12m) angenommen, wobei der Wärmestrom q in ein Rohr 7 hinein 100 kW/m² der Rohroberfläche betragen soll. Die Temperatur der Aussenwand betrage 350 ⁰K, der konvektive Wärmeübergangskoeffizient h 10 W / (m²K) was bei einer Umgebungstemperatur von 300 K einen totalen Wärmestrom q (durch Konvektion und Wärmestrahlung) von 0,89 kW/m² durch die Isolation ergibt.

Wird im Ofen des konventionellen Reformers beispielsweise Methan an Luft unter Umgebungsdruck verbrannt (CH₄ + 2 O₂ + 8 N₂ → CO₂ + 2 H2O + 8 N₂) und diesem konventionellen Betrieb der erfindungsgemässe Betrieb mit indirekt erwärmtem Gas, hier Wasserdampf unter Umgebungsdruck, gegenüber gestellt, ergibt sich nach einer Überschlagsrechnung der Anmelderin:

| Parameter | | konventioneller Ofen | indirekt erwärmtes Gas |
|---|---|---|---|
| Tᵢₙ | (Temperatur der Flamme /Einlasstemperatur des Gases) | 2050 ⁰K | 1580 ⁰K |
| Tₒᵤₜ | (Auslasstemperatur des Gases) | 1330 ⁰K | 1340 ⁰K |
| v | (Strömungsgeschwindigkeit) | 3,6 m/s | 11,2 m/s |
| T_{Gas} | Durchschnittstemperatur des Gases für die Überschlagsrechnung | 1550 ⁰K | 1460 ⁰K |
| p | (Partialdruck des infrarot strahlenden Gases - N₂ strahlt nicht infrarot) | 0,27 bar | 1 bar |
| ψ | (Verhältnis Absorption / Absorption + Konvektion) | 0, 95 | 0,97 |

Ein konventioneller Reformer, der die benötigte Wärme durch einen Ofen erzeugt, lässt sich somit über das erfindungsgemässe Betriebsverfahren mit indirekt erwärmtem, im Infrarotbereich strahlenden Gas betreiben. Dabei ist vorteilhaft, dass das indirekt erwärmte Gas im Kreislauf (mit oder ohne Wärmespeicher, s. Figur 2a) geführt werden kann, im Gegensatz zum Ofen, in welchem die Rauchgase nicht wiederverwendbar sind. Zudem kann, falls die indirekte Erwärmung durch einen solaren Receiver erfolgt, der umweltrelevante Footprint entscheidend verkleinert werden, ohne dass auf der Seite des Reformers grössere Investitionen notwendig werden. Schliesslich gilt auch hier, dass in Abwesenheit einer notwendigerweise sehr heissen Flamme über die Länge der Rohre eine gleichförmigere und damit günstigere Wärmeverteilung zu erwarten ist.

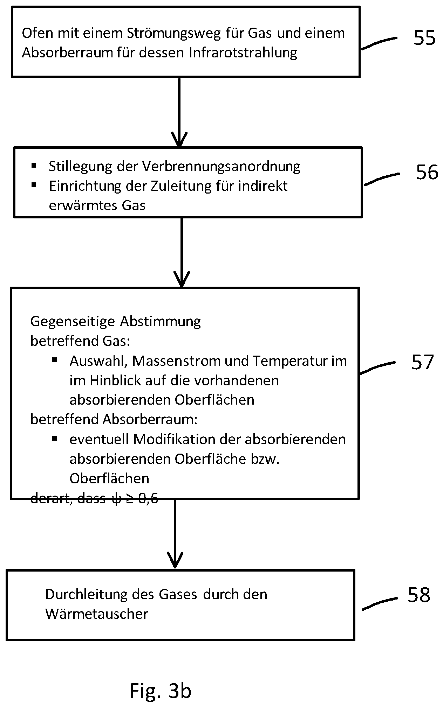

Figur 3b zeigt die Schritte des erfindungsgemässen Verfahrens zum Betrieb eines Ofens. In Schritt 55 wird ein Ofen bzw. ein Reformer ausgewählt, um diesen an Stelle von zu verbrennenden Stoffen mit indirekt erwärmtem, im Infrarotbereich strahlendem Gas zu betreiben.

In Schritt 56 wird die Verbrennungsanordnung stillgelegt oder entfernt und eine Zuleitung für indirekt erwärmtes, infrarot strahlendes Gas eingerichtet.

In Schritt 57 wird, analog zum Schritt 46 von Figur 2b, das infrarot strahlende Gas oder Gasgemisch ausgewählt und dessen Betriebsparameter festgelegt, um ein Verhältnis von ψ ≥ 0,6 zu erreichen.

Im Schritt 58 wird der bestimmungsgemässe Betrieb des Ofens mit der Durchleitung des Gases aufgenommen. Wiederum sind heteropolare Gase bevorzugt. Wie oben erwähnt sind CO₂, Wasserdampf, CH₄, NH₃, CO, SO₂, HCl, NO, und NO₂ oder ein Gemisch dieser Gase geeignet. Nicht strahlende Gase können durch den Fachmann im konkreten Fall zugemischt werden, wenn dies aus verfahrenstechnischen Gründen angezeigt ist, jedoch in den durch das Verhältnis ψ angezeigten Grenzen.

Es ergibt sich erfindungsgemäss ein Verfahren zum Betrieb eines Ofens, der einen Strömungsweg für zur Erzeugung der Nutzwärme zu verbrennende Gase aufweist, wobei im Strömungsweg ein Absorberraum vorhanden ist der wenigstens eine für die Aufnahme für den Wärmetausch über Infrarotstrahlung vorgesehene Oberfläche aufweist, und wobei die Verbrennungsanordnung des Ofens nicht verwendet und dieser mit einer Zuleitung für indirekt erwärmtes, im Infrarotbereich strahlendes Gas versehen wird, derart, dass dieses Gas betriebsfähig in den Strömungsweg für zu verbrennende Gase hinein und diesem entlang geführt werden kann, und dass dem Ofen im Betrieb indirekt erwärmtes, im Infrarotbereich strahlendes Gas mit einem Massenstrom und einer Temperatur zugeführt wird, so dass in der wenigstens einen absorbierenden Oberfläche das Verhältnis ψ des Wärmestroms durch Absorption gegenüber dem gesamten Wärmestrom ≥ 0,6 ist. Bevorzugt wird dabei der Ofen in einen Kreislauf aus indirekt erwärmtem Gas geschaltet, der bevorzugt einen Wärmespeicher einschliesst.

Bei einer in den Figuren nicht dargestellten Ausführungsform erfolgt der Wärmetausch im erfindungsgemässen Wärmetauscher nicht über Leitungen, die ein die getauschte Wärme aufnehmendes Fluid führen, sondern direkt auf einen im Absorberraum vorhandenen Werkstoff, der sich durch Absorption der infraroten Strahlung erwärmt, beispielsweise Metalle für eine Wärmebehandlung oder zur Erzeugung einer Metallschmelze oder beispielsweise auch zur Herstellung von Glas durch Erzeugung einer aus den Ausgangsprodukten bestehenden Schmelze. Es ergibt sich dann ein Verfahren, bei welchem bevorzugt eine absorbierende Oberfläche durch einen zu erwärmenden Werkstoff gebildet wird.

Figur 4 zeigt schematisch einen Receiver 60 gemäss der noch unveröffentlichten schweizerischen Patentanmeldung CH 00627/17 für die indirekte Erwärmung eines im Infrarotbereich strahlenden Gases bzw. Gasgemischs. Der Receiver 60 besitzt einen Erwärmungsbereich 61, der eine optische Öffnung 62, beispielsweise ein Quarzfenster, und einen Absorber 63, wobei zwischen dem Quarzfenster 64 und dem Absorber 63 ein Absorptionsraum 65 vorgesehen ist, der vom zu erwärmenden, infrarot strahlenden Gas den eingezeichneten Pfeilen entsprechend von rechts nach links, d.h. gegen den Absorber 63, durchströmt wird. Dazu weist die Transporteinrichtung 66 des Receivers 60 um das Quarzfenster 64 herum angeordnete Einlassstutzen 67 für Wärme transportierendes Medium auf, die in den Absorptionsraum 65 führen, und einen zentralen Auslassstutzen 68 hinter dem Absorber 63.

Der Absorber 63 ist als Schwarzkörper-Strahlungsanordnung mit reduzierter Konvektion ausgebildet, d.h. er besitzt eine im Pfad der einfallenden Sonnenstrahlung 69 angeordnete, diese Strahlung absorbierende Oberfläche 70, die derart ausgebildet ist, dass er sich auf Grund der auf die Oberfläche 70 einfallenden Sonnenstrahlung 69 betriebsfähig erhitzt und dann über seine Oberfläche 70 entsprechend Infrarotstrahlung 71 in den Absorberraum 65 abgibt.

Damit gibt der Absorber 63 seine Wärmeleistung zu einem wesentlichen Teil in Form von Infrarotstrahlung in den Absorberraum 65 ab, wo das auf ihn zuströmende Gas sich schon absorptiv erhitzt, bevor es ihn erreicht.

Wie oben erwähnt strahlt reale Struktur nur annähernd so, wie dies der ideale schwarze Körper tut. Vorliegend wird unter einer "Schwarzkörper-Strahlungsanordnung" verstanden, dass die einfallende Sonnenstrahlung 69 zu einem möglichst grossen Teil an der Oberfläche des Absorbers absorbiert wird (also grundsätzlich nur wenig in den Absorber eindringt, im Gegensatz zum volumetrischen Absorber), so dass diese Oberfläche sich hoch erhitzt und dadurch in der Art eines schwarzen Körpers mit der betreffenden, hohen Temperatur in den Absorberraum 65 strahlt. Der überwiegende Anteil der in den Absorberraum 65 abgegebenen Strahlung liegt bei Temperaturen des Absorbers 63 bis 2000 ⁰K (oder auch darüber) im Infrarotbereich, d.h. in gegenüber dem sichtbaren Licht tieferen Frequenzen.

Eine aufwendige, insbesondere für volumetrische Receiver vorgesehene, in die Tiefe gestaffelte Absorberstruktur, die über ihre Tiefe einfallende Strahlung entsprechend auch über ihre Tiefe absorbiert, indem diese im Inneren wenigstens teilweise gestreut und nach mehrfacher Reflektion zunehmend absorbiert wird, entfällt somit. Damit entfallen auch die häufig bei solchen Absorberstrukturen auftretenden, komplexen thermischen Probleme.

Dabei ist der Absorber 63 konvektionsarm ausgebildet, d.h. leicht durchströmbar, ohne dass erhöhte konvektive Eigenschaften für den Wärmetausch von Wichtigkeit sind. Es entfällt damit auch die Ausbildung für maximierte Konvektion des durchströmenden Mediums, d.h. die für einen möglichst effizienten Wärmetauscher notwendige Struktur mit im Vergleich zum durchströmenden Volumen des Wärme tauschenden Mediums grosser Oberfläche, welche bei hoher Effizienz aufwendig herzustellen ist und im Betrieb einen erheblichen Druckabfall des durchströmenden Mediums zur Folge hat.

An dieser Stelle sei angemerkt, dass ein gewisser konvektiver Wärmeübergang am Absorber 63 natürlich unvermeidlich ist, insbesondere bei der gezeigten Ausführungsform von Figur 4, da dieser dort einen Wandabschnitt des Absorptionsraums 65 bildet. Der entsprechende konvektive Wärmeübergang an das Wärme transportierende Gas ist natürlich, im Sinn des Wärmeübergangs, erwünscht - jedoch soll die Auslasstemperatur Tₒᵤₜ des erwärmten Gases zu einem wesentlichen Teil (s. dazu unten) auf Absorption basieren und so einen vereinfachten Aufbau des Receivers 60 ermöglichen. Der vereinfachte Aufbau des Absorbers 63 eröffnet unter anderem, wie oben erwähnt, die Möglichkeit für einen stabileren Betrieb beispielsweise in thermischer Hinsicht (Temperaturverteilung über dem Absorber 63), was zu einer verbesserten Industrietauglichkeit des Receivers führt.

Es ergibt sich ein Receiver mit einem Erwärmungsbereich für die Erwärmung von einem Wärme transportierenden Medium, der eine optische Öffnung für Sonnenlicht, und einen im Pfad des einfallenden Sonnenlichts angeordneten, das Sonnenlicht absorbierenden Absorber aufweist, mit einer Transportanordnung für den Transport des Mediums durch den Erwärmungsbereich hindurch, wobei der Absorber als Schwarzkörper - Strahlungsanordnung mit reduzierter Konvektion und die Transportanordnung für den Transport eines Gases als Wärme transportierendes Medium ausgebildet ist.

Bevorzugt ist dabei der als Schwarzkörper - Strahlungsanordnung mit reduzierter Konvektion ausgebildete Absorber für die Durchströmung des Wärme transportierenden Gases ausgebildet und liegt weiter bevorzugt der optischen Öffnung 64 gegenüber.

Als Wärme transportierendes Medium wird weiter ein Infrarot-absorbierendes Gas oder Gasgemisch verwendet, das in Frequenzbändern des Infrarotbereichs absorbiert. Solche Gase sind beispielsweise heteropolare Gase, bevorzugt CO₂, Wasserdampf, CH4, NH3, CO, SO2, HCl, NO, und NO2. Bei der Verwendung solcher Gase ergibt sich letztlich ein durch den Receiver 60 nutzbarer bzw. genutzter Treibhauseffekt, da diese Gase für das sichtbare Licht hoch durchsichtig sind, das damit den Absorber 63 im Wesentlichen erreicht, aber für die Infrarotstrahlung des Absorbers wenig bis kaum durchsichtig sind, so dass sie sich also vor dem Absorber 63 absorptiv erwärmen. Es sei hier angemerkt, dass reale Gase sichtbares Licht oder Infrarotstrahlung nicht gleichmässig über alle Frequenzen absorbieren oder durchsichtig sind, sondern vor allem in für ein jeweiliges Gas spezifischen Frequenzbändern unterschiedlich stark. Zusätzlich fällt die Absorption mit dem Abstand von der Strahlungsquelle ab. Dadurch wird oben im Hinblick auf die Absorption bzw. Durchsichtigkeit von Strahlung von "hoch durchsichtig" bzw. von "wenig bis kaum durchsichtig" gesprochen.

Der Absorber 63 kann als Lochplatte, bevorzugt als doppelte Lochplatte oder als einfache, flächige Gitterstruktur ausgebildet sein. Im Fall der Lochplatte wird ein Lochmuster über deren Ausdehnung verteilt, so dass das Wärme transportierende Gas leicht durchströmen kann, aber genügend Oberfläche der Lochplatte für die Absorption der einfallenden Sonnenstrahlung und der Infrarot-Rückstrahlung in den Absorberraum gegeben ist. Der Fachmann kann das Lochmuster im konkreten Fall leicht optimal bestimmen. Ebenso für den Fall einer Gitterstruktur oder doppelten Lochplatte mit zwei zu einander parallelen Platten, wobei dann die Löcher der einen Platte gegenüber denjenigen der anderen Platte gegeneinander versetzt angeordnet werden, derart, dass trotz konvektionsarmem Durchgang des Wärme tauschenden Gases dem Absorptionsraum eine möglich durchgehende, strahlende Fläche des Absorbers zugewendet ist. Ein geeigneter Werkstoff für den Absorber ist Siliziumcarbid SiC.

Da im Infrarotbereich absorbierende Gase ebenfalls im Infrarotbereich strahlen, können die oben erwähnten Gase für die solare Erwärmung im Receiver (bevorzugt, aber nicht ausschliesslich) eines Solar-Turmkraftwerks und dann für den erfindungsgemässen Wärmetausch vorgesehen werden. Möglich ist auch, dass ein Receiver gemäss Figur 2 bei Dish-Konzentratoren verwendet wird, da auch dort wegen der zweidimensionalen Konzentration der Sonnenstrahlung Temperaturen bis 2000 ⁰K und darüber erreichbar sind.

## Patentansprüche

1. Verfahren zum Wärmetausch von in einem Fluid enthaltener Wärme, **dadurch gekennzeichnet, dass** als Fluid ein indirekt erwärmtes, Infrarotstrahlung emittierendes Gas verwendet wird, welches sich in einem Absorberraum (3) eines Wärmetauschers (1) befindet, wobei im Absorberraum (3) wenigstens eine zur Nutzung der Wärme des Gases dessen Infrarotstrahlung absorbierende Oberfläche vorgesehen wird, **dadurch gekennzeichnet, dass** das Fluid über eine Zuleitung (2) zum Wärmetauscher und in diesem durch den Absorberraum hindurch geführt wird und dass der Massenstrom und die Temperatur des Gases derart eingestellt und die wenigstens eine für den Wärmetausch absorbierende Oberfläche derart ausgebildet wird, dass im Betrieb das Verhältnis ψ des durch sie fliessenden Wärmestroms durch Absorption gegenüber dem gesamten sie durchfliessenden Wärmestrom ≥ 0,6 ist.

2. Verfahren nach Anspruch 1, wobei das Verhältnis ψ ≥ 0,7, bevorzugt ≥ 0,8 und besonders bevorzugt >_ 0, 9 ist.

3. Verfahren nach Anspruch 1, wobei das Gas ein heteropolares Gas aufweist, bevorzugt CO₂, Wasserdampf, CH₄, NH₃, CO, SO₂, HCl, NO, und NO₂ oder ein Gemisch dieser Gase.

4. Verfahren nach Anspruch 1, wobei die wenigstens eine Oberfläche durch Leitungen für ein zu erwärmendes Medium, bevorzugt Rohrleitungen (7) oder durch wenigstens einen Wandabschnitt des Absorberraums gebildet wird.

5. Verfahren nach Anspruch 1, wobei eine absorbierende Oberfläche durch einen zu erwärmenden Werkstoff gebildet wird.

6. Verfahren nach Anspruch 1, wobei das Infrarotstrahlen emittierende Gas in einem den Wärmetauscher (1) einschliessenden Kreislauf geführt wird, in welchem das Gas indirekt erwärmt wird, und wobei bevorzugt in diesem Kreislauf vor dem Wärmetauscher (1) ein Wärmespeicher (31) vorgesehen wird.

7. Verfahren nach Anspruch 1 oder 6, wobei für die indirekte Erwärmung wenigstens eine der Wärmequellen Receiver (32), Wärmespeicher (35) oder Heizung, bevorzugt eine elektrische Heizung (38), die besonders bevorzugt photovoltaisch gespiesen ist, verwendet wird.

8. Verfahren nach Anspruch 1, wobei als Fluid ein indirekt auf eine Temperatur von ≥ 1000 ⁰K, bevorzugt ≥ 1300 ⁰K und besonders bevorzugt ≥ 1500 ⁰K erwärmtes Gas verwendet wird.

9. Verfahren nach Anspruch 1, wobei das Infrarotstrahlung emittierende Gas unter einem Druck grösser als der Umgebungsdruck durch den Absorberraum (3) geführt wird, bevorzugt ≥ 5 bar, bevorzugt ≥ 10 bar, besonders bevorzugt ≥ 20 bar und ganz bevorzugt ≥ 50 bar.

10. Wärmetauscher zur Ausführung des Verfahrens nach Anspruch 1, mit einer Anordnung zum Transport von im Wärmetauscher durch Infrarotstrahlung Wärme abgebendes Gas, die einen Absorberraum (3) aufweist mit wenigstens einer für den Wärmetausch über Infrarotstrahlung vorgesehenen Oberfläche, wobei der Wärmetauscher (1) mit einer Zuleitung (2) für indirekt erwärmtes, Wärme abgebendes Gas ausgebildet ist, **dadurch gekennzeichnet, dass** der Absorberraum (3) und die wenigstens eine absorbierende Oberfläche derart ausgebildet sind, dass im Betrieb bei einem vorbestimmten Massenstrom und einer vorbestimmten Temperatur des Wärme abgebenden Gases in der absorbierenden Oberfläche das Verhältnis ψ des sie durchfliessenden Wärmestroms durch Absorption gegenüber dem gesamten sie durchfliessenden Wärmestrom ≥ 0,6 ist, wobei die wenigstens eine absorbierende Oberfläche durch eine Anzahl Leitungen, bevorzugt Rohrleitungen (7), gebildet ist, und wobei die Leitungen (7) als Bündel angeordnet sind, das sich durch den Absorberraum (3) erstreckt, und zwischen den Leitungen Raum für betriebsfähig durchströmendes, infrarot strahlendes abgebendes Gas vorgesehen ist.

11. Wärmetauscher nach Anspruch 10, mit einer Anordnung zum Transport von im Wärmetauscher durch Infrarotstrahlung Wärme abgebendes Gas, die einen Absorberraum (3) aufweist mit wenigstens einer für den Wärmetausch über Infrarotstrahlung vorgesehenen Oberfläche, und einem durch die Anordnung strömenden durch Infrarotstrahlung Wärme abgebendes, indirekt erwärmtes Gas, wobei der Wärmetauscher (1) mit einer Zuleitung (2) für das indirekt erwärmte, Wärme abgebende Gas ausgebildet ist und der Absorberraum (3) und die wenigstens eine absorbierende Oberfläche derart ausgebildet und der Massenstrom und die Temperatur des Wärme abgebenden Gases derart eingestellt sind, dass in der absorbierenden Oberfläche das Verhältnis ψ des sie durchfliessenden Wärmestroms durch Absorption gegenüber dem gesamten sie durchfliessenden Wärmestrom ≥ 0,6 ist.

12. Wärmetauscher nach Anspruch 10 oder 11, wobei die Leitungen, als Rohrleitungen (7), ausgebildet sind.

13. Wärmetauscher nach Anspruch 10 oder 11, wobei im Absorberraum (3) eine Anzahl in diesem verteilte Leitungen mit je einer absorbierenden Oberfläche angeordnet sind und wenigstens eine im Betrieb durch das Wärme abgebende Gas ihrerseits erwärmbare weitere Oberfläche (23) vorgesehen ist, die im Betrieb durch Schwarzkörperstrahlung die absorbierenden Oberflächen bestrahlt, derart, dass der Wärmestrom durch Absorption durch die absorbierenden Oberflächen erhöht wird.

14. Wärmetauscher nach Anspruch 10 oder 11, wobei der Absorberraum (3) druckfest, für einen Druck des Wärme abgebenden Gases ≥ 5 bar, bevorzugt ≥ 10 bar, besonders bevorzugt ≥ 20 bar und ganz bevorzugt ≥ 50 bar ausgelegt ist.

15. Wärmetauscher nach Anspruch 10 oder 11, wobei die Anordnung zum Transport des Wärme abgebenden Gases betriebsfähig mit einer das Gas indirekt erwärmenden Wärmequelle verbunden ist, welche bevorzugt einen Wärmespeicher (31) aufweist.

16. Wärmetauscher nach Anspruch 15, wobei die Wärmequelle wenigstens eines der Wärme produzierenden Mittel solarer Receiver (32), Wärmespeicher (31) oder eine bevorzugt elektrische, besonders bevorzugt durch photovoltaischen Strom gespiesene Heizung (38) aufweist.

17. Verfahren zum Betrieb eines Ofens, der einen Strömungsweg für zur Erzeugung der Nutzwärme zu verbrennende Gase aufweist, wobei im Strömungsweg ein Absorberraum (50) vorhanden ist der wenigstens eine für die Aufnahme für den Wärmetausch über Infrarotstrahlung vorgesehene Oberfläche aufweist, **dadurch gekennzeichnet, dass** die Verbrennungsanordnung des Ofens nicht verwendet und dieser mit einer Zuleitung für indirekt erwärmtes, im Infrarotbereich strahlendes Gas versehen wird, derart, dass dieses Gas betriebsfähig in den Strömungsweg für zu verbrennende Gase hinein und diesem entlang geführt werden kann,
und dass dem Ofen im Betrieb indirekt erwärmtes, im Infrarotbereich strahlendes Gas mit einem Massenstrom und einer Temperatur zugeführt wird, so dass in der wenigstens einen absorbierenden Oberfläche das Verhältnis ψ des Wärmestroms durch Absorption gegenüber dem gesamten Wärmestrom ≥ 0,6 ist.

18. Verfahren nach Anspruch 17, wobei der Ofen in einen Kreislauf aus indirekt erwärmtem Gas geschaltet wird, der bevorzugt einen Wärmespeicher (31) einschliesst.

19. Verfahren nach Anspruch 18, wobei das indirekt erwärmte Gas eine Temperatur von ≥ 1000 ⁰K, bevorzugt ≥ 1300 ⁰K und besonders bevorzugt ≥ 1500 ⁰K aufweist.

## Claims

1. Method for heat exchange of heat contained in a fluid, **characterized in that** an indirectly heated gas emitting infrared radiation is used as the fluid, which gas is located in an absorber chamber (3) of the heat exchanger (1), at least one surface absorbing the infrared radiation of the gas being provided in the absorber chamber (3) for utilizing the heat of the gas, **characterized in in that** the fluid is guided to the heat exchanger via a feed line (2) and in the latter through the absorber space (3), and **in that** the mass flow and the temperature of the gas are set in such a way and the at least one surface absorbing for the heat exchange is configured in such a way that, in operation, the ratio ψ of the heat flow passing through it by absorption to the total heat flow passing through it is ≥ 0.6.

2. The method of claim 1, wherein the ratio ψ is ≥ 0.7, preferably ≥ 0.8, and particularly preferably >_ 0.9.

3. The method of claim 1, wherein the gas comprises a heteropolar gas, preferably CO₂, water vapor, CH₄, NH₃, CO, SO₂, HCl, NO, and NO₂ or a mixture of these gases.

4. The method according to claim 1, wherein the at least one surface is formed by conduits for a medium to be heated, preferably pipelines (7) or by at least one wall section of the absorber chamber.

5. The method according to claim 1, wherein an absorbing surface is formed by a material to be heated.

6. The method according to claim 1, wherein the gas emitting infrared rays is guided in a circuit including the heat exchanger (1), in which the gas is indirectly heated, and wherein preferably a heat accumulator (31) is provided in this circuit upstream of the heat exchanger (1).

7. The method according to claim 1 or 6, wherein for the indirect heating at least one of the heat sources receiver (32), heat accumulator (35) or heater, preferably an electric heater (38), which is particularly preferably photovoltaically fed, is used.

8. The method according to claim 1, wherein a gas indirectly heated to a temperature of ≥ 1000 ⁰K, preferably ≥ 1300 ⁰K and particularly preferably ≥ 1500 ⁰K is used as fluid.

9. The method according to claim 1, wherein the gas emitting infrared radiation is passed through the absorber chamber (3) at a pressure greater than the ambient pressure, preferably ≥ 5 bar, preferably ≥ 10 bar, particularly preferably ≥ 20 bar and most preferably ≥ 50 bar.

10. Heat exchanger for carrying out the method according to claim 1, having an arrangement for transporting gas which gives off heat in the heat exchanger by infrared radiation, which arrangement has an absorber space (3) with at least one surface provided for heat exchange via infrared radiation, the heat exchanger (1) being configured with a feed line (2) for indirectly heated, heat-absorbing gas, **characterized in that** the absorber space (3) and the at least one absorbing surface are configured in such a way that in operation, at a predetermined mass flow and a predetermined temperature of the heat-emitting gas in the absorbing surface, the ratio ψ of the heat flux flowing through it by absorption to the total heat flux flowing through it is ≥ 0.6, wherein the at least one absorbing surface is formed by a number of conduits, preferably pipe conduits (7), and wherein the conduits (7) are arranged as a bundle extending through the absorber space (3), and between the conduits space is provided for operationally flowing infrared radiating emitting gas.

11. Heat exchanger according to claim 10, comprising an arrangement for transporting in the heat exchanger infrared radiation heat emitting gas comprising an absorber space (3) with at least one surface provided for heat exchange via infrared radiation, and an indirectly heated infrared radiation heat emitting gas flowing through the arrangement, wherein the heat exchanger (1) is formed with a supply conduit (2) for the indirectly heated infrared radiation heat emitting gas, heat-emitting gas, and the absorber space (3) and the at least one absorbing surface are formed and the mass flow and the temperature of the heat-emitting gas are set in such a way that in the absorbing surface the ratio ψ of the heat flow passing through it by absorption to the total heat flow passing through it is ≥ 0.6.

12. Heat exchanger according to claim 10 or 11, wherein wherein the conduits are configured as pipes (7).

13. Heat exchanger according to claim 10 or 11, wherein in the absorber space (3) a number of conduits distributed therein are arranged, each with an absorbing surface, and at least one further surface (23) is provided which in turn can be heated in operation by the heat-emitting gas and which in operation irradiates the absorbing surfaces by blackbody radiation in such a way that the heat flow is increased by absorption by the absorbing surfaces.

14. Heat exchanger according to claim 10 or 11, wherein the absorber chamber (3) is pressure-resistant, designed for a pressure of the heat-emitting gas ≥ 5 bar, preferably ≥ 10 bar, particularly preferably ≥ 20 bar and most preferably ≥ 50 bar.

15. Heat exchanger according to claim 10 or 11, wherein the arrangement for transporting the heat-emitting gas is operatively connected to a heat source indirectly heating the gas, which preferably comprises a heat accumulator (31).

16. Heat exchanger according to claim 15, wherein the heat source comprises at least one of the heat producing means solar receiver (32), heat accumulator (31) or a preferably electric heater (38), particularly preferably fed by photovoltaic current.

17. Method of operating a furnace which has a flow path for gases to be burned to produce useful heat, an absorber space (50) being present in the flow path, which absorber space (50) has at least one surface intended to receive heat exchange via infrared radiation, **characterized in that** the combustion arrangement of the furnace is not used and the furnace is provided with a supply line for indirectly heated gas radiating in the infrared range, such that this gas can be operably guided into and along the flow path for gases to be burned, and that indirectly heated gas radiating in the infrared range is supplied to the furnace during operation is supplied to the furnace with a mass flow and a temperature such that in the at least one absorbing surface the ratio ψ of the heat flow by absorption to the total heat flow is ≥ 0.6.

18. Method according to claim 17, wherein the furnace is connected in a circuit of indirectly heated gas, preferably including a heat accumulator (31).

19. Method according to claim 18, wherein the indirectly heated gas has a temperature of ≥ 1000 ⁰K, preferably ≥ 1300 ⁰K and particularly preferably ≥ 1500 ⁰K.

## Revendications

1. Procédé d'échange thermique de la chaleur contenue dans un fluide, **caractérisé en ce que** l'on utilise comme fluide un gaz chauffé indirectement, émettant un rayonnement infrarouge, qui se trouve dans une chambre d'absorption (3) de l'échangeur thermique (1), au moins une surface absorbant le rayonnement infrarouge du gaz étant prévue dans la chambre d'absorption (3) pour utiliser la chaleur du gaz, **caractérisé en ce que** l'on utilise comme fluide un gaz chauffé indirectement, émettant un rayonnement infrarouge, **en ce que** le fluide est amené par une conduite d'amenée (2) à l'échangeur de chaleur et, dans celui-ci, à travers l'espace d'absorption (3) et **en ce que** le débit massique et la température du gaz sont réglés et l'au moins une surface absorbant pour l'échange de chaleur est réalisée de telle sorte qu'en fonctionnement, le rapport ψ du flux de chaleur qui la traverse par absorption par rapport au flux de chaleur total qui la traverse est ≥ 0,6.

2. Procédé selon la revendication 1, dans lequel le rapport ψ est ≥ 0,7, de préférence ≥ 0,8 et de manière particulièrement préférée ≥ 0, 9.

3. Procédé selon la revendication 1, dans lequel le gaz comprend un gaz hétéropolaire, de préférence CO₂, vapeur d'eau, CH₄, NH₃, CO, SO₂, HCl, NO, et NO₂ ou un mélange de ces gaz.

4. Procédé selon la revendication 1, dans lequel la au moins une surface est formée par des conduites pour un fluide à chauffer, de préférence des conduites tubulaires (7) ou par au moins une section de paroi de la chambre d'absorption.

5. Procédé selon la revendication 1, dans lequel une surface absorbante est formée par un matériau à chauffer.

6. Procédé selon la revendication 1, dans lequel le gaz émettant des rayons infrarouges est guidé dans un circuit comprenant l'échangeur de chaleur (1), dans lequel le gaz est chauffé indirectement, et dans lequel, de préférence, un accumulateur de chaleur (31) est prévu dans ce circuit avant l'échangeur de chaleur (1).

7. Procédé selon la revendication 1 ou 6, dans lequel on utilise pour le chauffage indirect au moins l'une des sources de chaleur que sont le récepteur (32), l'accumulateur de chaleur (35) ou le chauffage, de préférence un chauffage électrique (38), qui est de préférence alimenté par énergie photovoltaïque.

8. Procédé selon la revendication 1, dans lequel on utilise comme fluide un gaz chauffé indirectement à une température de ≥ 1000 ⁰K, de préférence ≥ 1300 ⁰K et de manière particulièrement préférée ≥ 1500 ⁰K.

9. Procédé selon la revendication 1, dans lequel le gaz émettant un rayonnement infrarouge est conduit à travers la chambre d'absorption (3) sous une pression supérieure à la pression ambiante, de préférence >_ 5 bar, de préférence >_ 10 bar, de manière particulièrement préférée ≥ 20 bar et de manière tout à fait préférée ≥ 50 bar.

10. Echangeur de chaleur pour la mise en oeuvre du procédé selon la revendication 1, avec un agencement pour le transport de gaz dégageant de la chaleur par rayonnement infrarouge dans l'échangeur de chaleur, qui présente une chambre d'absorption (3) avec au moins une surface prévue pour l'échange de chaleur par rayonnement infrarouge, l'échangeur de chaleur (1) étant réalisé avec une conduite d'alimentation (2) pour du gaz dégageant de la chaleur chauffé indirectement, **caractérisé en ce que** la chambre d'absorption (3) et la au moins une surface absorbante sont réalisées de telle sorte, qu'en fonctionnement, pour un flux massique prédéterminé et une température prédéterminée du gaz dégageant de la chaleur dans la surface absorbante, le rapport ψ du flux de chaleur qui la traverse par absorption par rapport au flux de chaleur total qui la traverse est ≥ 0,6, dans lequel la au moins une surface absorbante est formée par un certain nombre de conduits, de préférence des conduits tubulaires (7), et dans lequel les conduits (7) sont disposés sous la forme d'un faisceau qui s'étend à travers l'espace d'absorption (3), et un espace est prévu entre les conduits pour le gaz émettant un rayonnement infrarouge qui s'écoule de manière opérationnelle.

11. Echangeur de chaleur selon la revendication 10, avec un agencement pour le transport de gaz dégageant de la chaleur par rayonnement infrarouge dans l'échangeur de chaleur, qui présente un espace d'absorption (3) avec au moins une surface prévue pour l'échange de chaleur par rayonnement infrarouge, et un gaz chauffé indirectement dégageant de la chaleur par rayonnement infrarouge qui s'écoule à travers l'agencement, l'échangeur de chaleur (1) étant pourvu d'une conduite d'alimentation (2) pour le gaz chauffé indirectement, gaz cédant de la chaleur et l'espace d'absorption (3) et la au moins une surface absorbante sont formés et le débit massique et la température du gaz cédant de la chaleur sont réglés de telle sorte que dans la surface absorbante, le rapport ψ du flux de chaleur par absorption qui la traverse par rapport au flux de chaleur total qui la traverse est ≥ 0,6.

12. Echangeur de chaleur selon la revendication 10 ou 11, dans lequel les conduits sont des conduits tubulaires (7).

13. Echangeur de chaleur selon la revendication 10 ou 11, dans lequel un certain nombre de conduites réparties dans l'espace d'absorption (3) sont disposées avec chacune une surface absorbante et au moins une autre surface (23) pouvant être chauffée à son tour en fonctionnement par le gaz cédant de la chaleur est prévue, laquelle irradie en fonctionnement les surfaces absorbantes par rayonnement du corps noir, de telle sorte que le flux de chaleur est augmenté par absorption par les surfaces absorbantes.

14. Echangeur de chaleur selon la revendication 10 ou 11, dans lequel l'espace d'absorption (3) est conçu pour résister à la pression, pour une pression du gaz dégageant de la chaleur ≥ 5 bars, de préférence ≥ 10 bars, de manière particulièrement préférée ≥ 20 bars et de manière tout à fait préférée ≥ 50 bars.

15. Echangeur de chaleur selon la revendication 10 ou 11, dans lequel l'agencement pour le transport du gaz dégageant de la chaleur est relié de manière opérationnelle à une source de chaleur réchauffant indirectement le gaz, qui comprend de préférence un accumulateur de chaleur (31).

16. Echangeur de chaleur selon la revendication 15, dans lequel la source de chaleur d'au moins un des moyens de production de chaleur comprend un récepteur solaire (32), un accumulateur de chaleur (31) ou un chauffage (38) de préférence électrique, de préférence alimenté par de l'électricité photovoltaïque.

17. Procédé d'exploitation d'un four qui présente une voie d'écoulement pour des gaz à brûler pour produire la chaleur utile, une chambre d'absorption (50) étant présente dans la voie d'écoulement et présentant au moins une surface prévue pour recevoir l'échange de chaleur par rayonnement infrarouge, **caractérisé en ce que** l'agencement de combustion du four n'est pas utilisé et que celui-ci est pourvu d'une conduite d'amenée pour du gaz chauffé indirectement et rayonnant dans le domaine infrarouge, de telle sorte que ce gaz puisse être conduit de manière à pouvoir être entraîné dans le trajet d'écoulement pour les gaz à brûler et le long de celui-ci, et **en ce que**, pendant le fonctionnement, du gaz chauffé indirectement et rayonnant dans l'infrarouge est envoyé au four avec un débit massique et une température tels que, dans ladite au moins une surface absorbante, le rapport ψ du flux de chaleur par absorption sur le flux de chaleur total est >_ 0,6.

18. Procédé selon la revendication 17, dans lequel le four est branché sur un circuit de gaz chauffé indirectement, qui inclut de préférence un accumulateur de chaleur (31).

19. Procédé selon la revendication 18, dans lequel le gaz chauffé indirectement présente une température ≥ 1000 ⁰K, de préférence ≥ 1300 ⁰K et plus préférentiellement ≥ 1500 ⁰K.
